# EUROPÄISCHE PATENTSCHRIFT

(11) **EP 0 619 753 B1**
(45) Veröffentlichungstag und Bekanntmachung des Hinweises auf die Patenterteilung: **20.12.2000**
(21) Anmeldenummer: 93921773.3
(22) Anmeldetag: 08.10.1993
(51) Int. Cl.: B01D 24/46, B01J 19/10, B01D 37/02, B01D 41/02, B01D 43/00

(54) **VERFAHREN UND VORRICHTUNG ZUM TRENNEN VON ABLAGERUNGEN VON FILTERHILFSSTOFFEN**
PROCESS AND DEVICE FOR REMOVING DEPOSITS FROM FILTER AUXILIARIES
PROCEDE ET DISPOSITIF POUR LA SEPARATION DE DEPOTS DE MATIERES AUXILIAIRES DE FILTRATION

(30) Priorität: 08.10.1992 CH 314992
(43) Veröffentlichungstag der Anmeldung: 19.10.1994
(73) Patentinhaber: SOFIMA AG, CH-8304 Wallisellen (CH)
(72) Erfinder: GÄHLER, Franz, CH-9500 Wil (CH); KELLER, Urs, CH-8472 Seuzach (CH); MEIER, Roland, CH-8406 Winterthur (CH)
(74) Vertreter: Gachnang, Hans Rudolf
(86) Internationale Anmeldenummer: CH9300240
(87) Internationale Veröffentlichungsnummer: WO9408693

(56) Entgegenhaltungen:
- EP-A- 0 253 233
- FR-A- 1 177 924
- FR-A- 1 212 496
- US-A- 3 362 533

## Beschreibung

Gegenstand der Erfindung ist ein Verfahren und eine Vorrichtung zum Trennen von Ablagerungen von Filterhilfsstoffen.

Das Trennen von gallertartigen und anderen Ablagerungen, z.B. organischen Filtraten von Filtern und Filterhilfsstoffen, erfolgt heute in der Regel durch einen thermischen oder chemischen Prozess.

Aus der Europäischen Patentanmeldung 0253233 ist ein Verfahren zur Regenerierung von gebrauchter, als Filterhilfsstoff im Brauereiwesen eingesetzter Kieselgur bekannt. Verfahrensgemäss wird dort die gebrauchte Kieselgur mit einer 2 bis 8%igen Natronlauge bei einer Reaktionstemperatur von 60° bis 80° versetzt und einer Reaktionszeit von 30 bis 120 Minuten unter Rühren ausgesetzt. Die sehr hohe Laugenkonzentration und Temperatur bewirken eine im wesentlichen vollständige Auflösung der organischen Ablagerungen (Hefe, Eiweiß etc.) auf den Kieselgurpartikeln.
Für die Filtration in der Brauerei können der Kieselgur noch Zusatzstoffe, beispielsweise eiweisseitige und/oder gerbstoffseitige Stabilisierungsmittel, zugesetzt sein. Im folgenden wird unter dem Begriff Filterhilfsstoffe sowohl Kieselgur in reiner Form als auch Kieselgur mit Zusatzstoffen oder reine Zusatzstoffe verstanden.
Die meisten Zusatzstoffe, wie auch Feinstanteile der Kieselgur, werden bei der für die Lösung der organischen Ablagerungen notwendigen hohen Laugenkonzentration, wie sie in der EP-A2-0253233 vorgeschrieben wird, ebenfalls teilweise oder vollständig aufgelöst.

Die Aufgabe der vorliegenden Erfindung ist die Schaffung eines Verfahrens und einer Vorrichtung zur schonenden und verlustarmen Trennung von Ablagerungen von Filterhilfsstoffen.

Gelöst wird diese Aufgabe durch ein Verfahren mit den Merkmalen des Patentanspruchs 1, sowie durch eine Vorrichtung mit den Merkmalen des Patentanspruchs 13.

Erfindungsgemäss gelingt es durch die Beschallung der in einem Schallübertragungsmedium suspendierten oder eingebrachten Filterhilfsstoffe, die daran haftenden/klebenden gallertartigen Ablagerungen von den Stoffen abzulösen und auch aus deren Porenstruktur herauszulösen. Zudem können die abgelösten Ablagerungen im Beschallungsmedium in kleinere Fraktionen aufgelöst und in liberierter Form gehalten werden, was den folgenden Trennvorgang erleichtert.
Vorteilhafterweise erfolgt die Beschallung im alkalischen Bereich, z.B. durch Verwendung von Natronlauge als Beschallungsflüssigkeit oder als Zusatz zur Beschallungsflüssigkeit. Im Gegensatz zur EP-A2-0 253 233 kann diese Behandlung in einer sehr geringen Konzentration von unter 2% Lauge erfolgen. Es wird dadurch erreicht, dass die Kieselgurpartikel und Stabilisierungsmittel nicht aufgelöst werden und auch ohne Erwärmung die Ablösung der Ablagerungen durch die Lauge unterstützt wird. Zudem können die abgelösten Ablagerungen in ihrer Feinstaufteilung liberiert gehalten werden. Für die Aufarbeitung des Abwassers sind wegen der kleinen Laugenkonzentration nur sehr kleine Mengen an Säure notwendig.
Die Trennung der Kieselgurpartikel samt allfälligen vorhandenen Stabilisierungsmitteln von den abgelösten Ablagerungen und der Beschallungsflüssigkeit gelingt in hervorragender Weise in einer Separationsvorrichtung, z.B. in einer Zentrifuge, in welcher nach dem Separationsvorgang und dem allenfalls anschliessenden Waschvorgang im wesentlichen nur reine Filterhilfsstoffe mit einer Restfeuchte von ca. 40 - 50 % zurückbleiben. Die Aufbereitung der Filterhilfsmittel kann bei Raumtemperatur und direkt in der Brauerei mit geringem Aufwand an Energie, Einrichtungen und Personal erfolgen. Das Ausspülen des Filterkuchens aus der Filtervorrichtung mit einer alkalischen Flüssigkeit, wie sie in Brauereien auch zu Reinigungszwecken anderer Art ohnehin vorhanden ist, ergibt eine längere Verweildauer der mit Ablagerungen verunreinigten Filterhilfsstoffe in alkalischer Umgebung und verkürzt und vereinfacht die Behandlung und Aufbereitung. Die Erhitzung der Filterhilfsstoffe und Warmhaltung in suspendiertem Zustand erlaubt es, diese im Anschluss an die Aufbereitung direkt wieder dem Schwemmfilter in der Filtervorrichtung sterilisiert zuzuführen.
In einer Zentrifuge kann die Trennung der Filterhilfsstoffe von den Ablagerungen und der Behandlungsflüssigkeit in einfacher und effizienter Weise erfolgen. Es werden dabei gleichzeitig die Ablagerungen und die alkalische Behandlungsflüssigkeit von den Filterhilfsstoffen getrennt. Ein nachfolgender Spülvorgang kann ausschliesslich einer Überführung der Filterhilfsstoffe in den neutralen oder sauren Bereich dienen.
Die erfindungsgemässe Vorrichtung weist einen einfachen Aufbau auf. Das Ablösen und das Trennen der Ablagerungen von den Filterhilfsstoffen kann in einer vorteilhaften Ausführungsform der Erfindung in derselben Zone erfolgen.

Im folgenden wird das Ablösen und Trennen (Separieren) gallertartiger Ablagerungen anhand des Beispieles der Trennung von Kieselgur von organischen Stoffen, wie Hefe und Eiweiß, aus der Schwemm-Filtration von Bier erläutert.

Es zeigen:
- Figur 1: eine schematische Darstellung einer Anlage für das Ablösen und Trennen von Ablagerungen von Filterhilfsstoffen,
- Figur 2: eine schematische Darstellung einer Anlage für das Ablösen und Trennen von Ablagerungen von vliesförmigen Filterhilfsstoffen,
- Figur 3: ein Kieselgurpartikel mit einer anhaftenden organischen Ablagerung,
- Figur 4: ein Kieselgurpartikel mit einer abgelösten und in kleinere Stücke aufgetrennten Ablagerung.

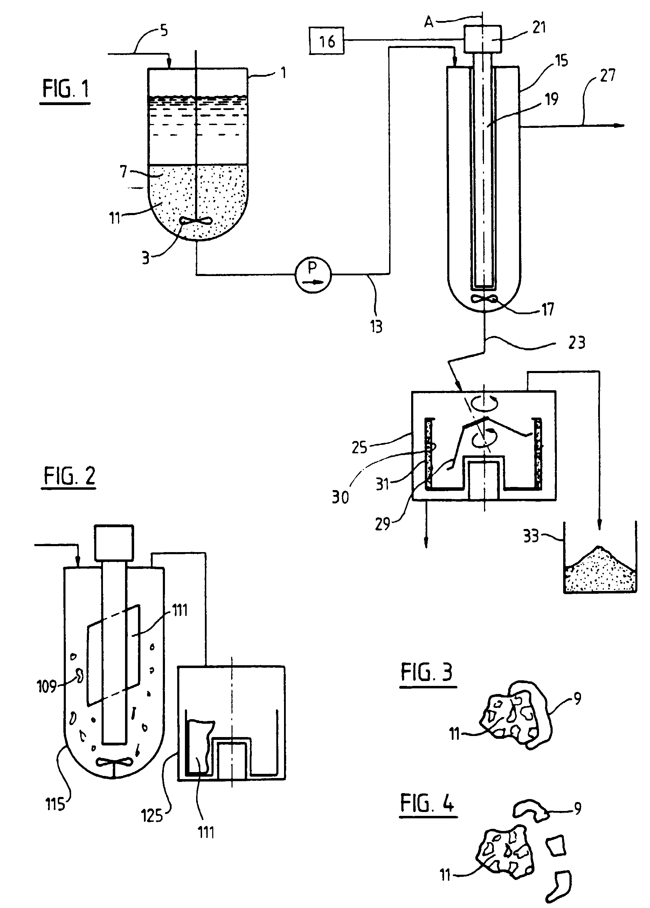

Einem Behälter 1 mit einem Rührwerk 3 zum Umrühren des Behälterinhaltes werden über eine Leitung 5 in einer Beschallungs-Flüssigkeit als Schwingungs- und Schallübertragungsflüssigkeit 7, z.B. Wasser, suspendierte und mit Ablagerungen 9 verunreinigte granulat- oder pulverförmige Stoffe 11, im Beispiel aus Kieselgur bestehende Filterhilfsstoffe, zugeleitet, welche zuvor zur Schwemm-Filtration von Bier verwendet worden sind (Figuren 3/4). Das zugefügte Wasser kann bereits zur Ab- und Auflösung des Filterkuchens in der Filtervorrichtung benutzt worden sein. Die Ablagerungen aus organischen Stoffen können z.B. plastisch deformierbare, gallertartige Hefe- und Eiweissstoffe sein. In der Suspension können sich auch eiweisseitige oder gerbstoffseitige Stabilisierungsmittel befinden. Auf letzteren haften ebenfalls Rückstände aus der Filtration, die abgelöst werden, um deren Rückgewinnung zu ermöglichen.

Im Behälter 1 kann die Suspension, wie sie beim Ausspülen des Filterkuchens in der Brauerei entstanden ist, mit weiterer Flüssigkeit verdünnt werden, um den prozentualen Anteil von Festkörpern in der Gesamtflüssigkeitsmenge (Schallübertragungsflüssigkeit) auf ein geeignetes Verhältnis zu verringern. Das Verhältnis der Gewichtsanteile von Kieselgur zu Flüssigkeit beträgt etwa 1:5. Vorzugsweise ist der flüssige Anteil noch grösser.
Zur Mobilisierung der später vom Kieselgur abgelösten und in kleine Stücke aufgetrennten organischen Teilchen kann der Suspension zusätzlich eine Lauge, z.B. Natronlauge, zugesetzt werden, wobei sogar eine Konzentration von weniger als 1% in der Beschallungsflüssigkeit verwendet werden kann. Es besteht auch die Möglichkeit, bereits zum Ausspülen der mit Ablagerungen beladenen Kieselgur aus der Filtervorrichtung anstelle von Wasser alkalische Flüssigkeit zu verwenden.
Die Suspension von im beschriebenen Beispiel Wasser und verschmutzter Kieselgur und allenfalls Stabilisierungsmittel sowie Lauge werden anschliessend mit einer Pumpe P oder durch Gefälle durch eine Leitung 13 in eine Beschallungszone 15 überführt. Der Behälter 1 und die Beschallungszone 15 können auch miteinander kombiniert sein.

In der Beschallungszone 15 ist weiter ein Beschallungsorgan in Gestalt einer Schallsonde mit einem Schallwandler 21 und einem Resonator 19 eingesetzt. Der dargestellte Resonator 19 kann sich über annähernd die gesamte Höhe des Beschallungsbehälters 15 erstrecken und steht in Wirkverbindung mit dem Schallwandler 21, der hier ausserhalb des Beschallungsbehälters 15 angeordnet ist und über eine Leitung 16 mit einem Schallgenerator verbunden ist. Eine solche Beschallungsvorrichtung 21 ist beispielsweise aus der DE-A-3027533 bekannt und kann im Handel erworben werden.

Besonders vorteilhaft ist die Verwendung einer Schallsonde, wie sie im Schweizer Patent 618847 beschrieben ist. Eine solche lässt einen höheren Anteil an Festkörpern in der zu beschallenden Flüssigkeit zu. Dies führt zu höherer Wirtschaftlichkeit der Anlage.

Von der Beschallungszone 15 führt eine Leitung 23 zu einer Separationsvorrichtung 25, in welcher die sich nun in Suspension befindlichen abgelösten Ablagerungen 9 (Hefe, Eiweiß etc.) und die Kieselgurpartikel, allenfalls Stabilisierungsmittel, sowie die Beschallungsflüssigkeit getrennt werden. Die Separationsvorrichtung kann in einer weiteren Ausgestaltung der Erfindung innerhalb der Beschallungszone angeordnet sein.

Im Beispiel wird als Separationsvorrichtung 25 eine Vertikal-Zentrifuge der Firma Ferrum AG, CH-5102 Rupperswil, verwendet.
Die Suspension aus der Beschallungszone 15 aus Kieselgurpartikel und Stabilisierungsmittel - falls vorhanden - Lauge und die abgelösten organischen Stoffen werden dazu auf einen schrägen Aufgabeteller 29 geleitet, der eine optimale Verteilung der eingeführten Suspension an der Peripherie des Laufkorbes 31 erlaubt.
Die durch den Aufgabeteller 29 in den Laufkorb 31 geschleuderten Filterhilfsstoffe 11 lagern sich auf einem den Korb 31 beaufschlagenden Filtertuch 30 mit beispielsweise 25 Mikron Maschenweite ab und bilden dort, ähnlich dem Filterkuchen in der Filteranlage in der Brauerei, eine sich stetig verdickende Schicht.
Die Beschallungsflüssigkeit, im beschriebenen Beispiel das Wasser, wird durch die Zentrifugalbeschleunigung im Bereich von 500 bis 1250 g kontinuierlich durch die Ablagerungsschicht aus Kieselgur und Stabilisierungsmittel hindurch nach aussen geschleudert und kann dort aufgefangen werden. Auch die durch den Beschallungsprozess in der Beschallungszone 15 von den Filterhilfsstoffen 11 und der Stabilisierungsmittel losgelösten und in feiner Suspension gehaltenen Ablagerungen 9 werden durch die Filterschicht hindurch aus dem Laufkorb 31 hinausgeschleudert. Eine Wiederablagerung auf der Oberfläche der Kieselgurpartikel 11, wie dies zuvor bei der Schwemm-Filtration im Schwemmfilter erfolgte, findet überraschenderweise nicht statt.
Es liegt in der Natur des Kieselgurs, dass nicht die gesamte Wassermenge durch Schleudern ausgeschieden werden kann. Es hat sich jedoch erstaunlicherweise gezeigt, dass in der Porenstruktur zurückgehaltenes (adsorbiertes) Wasser nur mit wenigen Ablagerungen befrachtet ist. Der Flüssigkeitsanteil im Filterkuchen beträgt etwa 40 - 50%. Zur Erhöhung der Reinheit der Kieselgur kann diese mit Flüssigkeit gespült werden. Diese Spülung kann in der Zentrifuge erfolgen. Es ist gleichzeitig möglich, den pH-Wert der Kieselgur beim Nachspülen zu senken oder in den sauren Bereich zu führen, um eine mikrobiologisch sichere Aufbewahrung bis zur Wiederverwendung im Schwemmfilter zu ermöglichen.

Im Laufkorb 31 der Zentrifuge zurückgehaltene reine Filterhilfsstoffe (Kieselgur ohne Ablagerungen) und - falls Stabilisierungsmittel vorhanden sind - auch solche, werden in bekannter Weise vom Laufkorb 31 mechanisch mittels eines Messers oder durch einen Wasserstrahl abgelöst und in ein Transportgefäss 33 geleitet. Falls nötig, kann noch eine Sterilisation der gereinigten Filterhilfsstoffe 11 erfolgen, bevor diese wiederum in einen Schwemmfilter eingeleitet werden. Die Sterilisation erfolgt vorzugsweise wieder in aufgeschlemmten Zustand der Filterhilfsstoffe bei einer Temperatur von ca. 85°C. Die Schlemmkonzentration (Kieselgur/Flüssigkeit) kann jener der kontinuierlichen Dosage in die Filtervorrichtung bei der Bierfiltration in der Brauerei entsprechen. In besonders vorteilhafter Weise werden die aufgeschlemmten Filterhilfsstoffe in warmem Zustand zudosiert.

Die Trennung der abgelösten Ablagerungen von den Filterhilfsstoffen kann auch in einem Flüssigkeitsstrom in unmittelbarem Anschluss an das Ablösen erfolgen. Eine entsprechende Vorrichtung ist in der Internationalen Patentanmeldung PCT/CH93......(gleichentags eingereicht in Bern mit der internen Referenz G2359PCT) beschrieben.

Die Behandlung (Ablösen, Verkleinern, Trennen, pH-Wert-Verschiebung, Sterilisation, in feiner Verteilung halten, Beschallen etc.) der Filterhilfsstoffe kann chargenweise oder online erfolgen.

Das Ablösen und Trennen von Ablagerungen 9 von vliesförmigen Filtermatten oder -körpern 111 erfolgt, wie in Figur 2 dargestellt, durch Eintauchen der Filterkörper 111 in eine Beschallungsflüssigkeit in einer Beschallungszone 115. Nach der Beschallung und dem durch Beschallung erfolgten Ablösen der Ablagerungen 109 aus dem Flächenfilter 111 können die restlichen, lose im Filter 111 verweilenden zerkleinerten Ablagerungen 109 durch eine Separierung, in einer Separationsvorrichtung 125, z.B. einer Zentrifuge, aus dem Filter 111 herausgeschleudert werden.
Unter vliesförmigen Filterkörpern werden auch solche aus Geweben oder Gewirken verstanden.

## Patentansprüche

1. Verfahren zum Ablösen und Trennen von Ablagerungen von Filterhilfsstoffen, bei dem
- die Filterhilfsstoffe zusammen mit einer Beschallungsflüssigkeit in eine Beschallungszone eingebracht,
- die Ablagerungen durch eine Beschallung mit Schallwellen von den Filterhilfsstoffen abgelöst und anschliessend
- in einer Separationsvorrichtung die Filterhilfsstoffe in Form einer Filterschicht zurückgehalten und Beschallungsflüssigkeit und Ablagerungen durch die Filterschicht hindurchgeleitet und ausgeschieden werden.

2. Verfahren nach Anspruch 1, dadurch gekennzeichnet, dass die Beschallungsflüssigkeit, zusammen mit den abgelösten Ablagerungen und den Filterhilfsstoffen von der Beschallungszone in die Separationsvorrichtung geleitet werden.

3. Verfahren nach Anspruch 1, dadurch gekennzeichnet, dass die Ablagerungen aufgeteilt und durch Beschallung in gegenseitig liberierter Form gehalten separiert werden.

4. Verfahren nach einem der Ansprüche 1 bis 3, dadurch gekennzeichnet, dass die Beschallung der mit Ablagerungen beladenen Filterhilfsstoffe in einer alkalischen Beschallungsflüssigkeit mit einer Laugenkonzentration von weniger als 2% erfolgt.

5. Verfahren nach einem der Ansprüche 1 bis 4, dadurch gekennzeichnet, dass die Trennung (Separation) der Ablagerungen und der Beschallungsflüssigkeit von den Filterhilfsstoffen durch Zentrifugieren erfolgt.

6. Verfahren zur Trennung von Filterhilfsstoffen und davon abgelösten Ablagerungen und dazu verwendeter Behandlungsflüssigkeit gemäss einem der vorangehenden Ansprüche 1 bis 5, dadurch gekennzeichnet, dass die Behandlungsflüssigkeit mit den darin enthaltenen, in liberierter Form vorliegenden Ablagerungen und die Filterhilfsstoffe kontinuierlich einer Separationsvorrichtung zugeführt wird, in welcher die Filterhilfsstoffe zurückgehalten werden und eine kontinuierlich dicker werdende Filterschicht bilden, durch welche die Behandlungsflüssigkeit mit den Ablagerungen hindurchgeführt wird und die Ablagerungen und die Behandlungsflüssigkeit von den Filterhilfsstoffen getrennt werden.

7. Verfahren nach einem der Ansprüche 1 bis 6, dadurch gekennzeichnet, dass die Filterhilfsstoffe während des Separationsvorganges mit Flüssigkeit nachgespült werden.

8. Verfahren nach Anspruch 7, dadurch gekennzeichnet, dass der pH-Wert der Filterhilfsstoffe durch die Spülflüssigkeit gesenkt wird.

9. Verfahren nach einem der Ansprüche 1 bis 8, dadurch gekennzeichnet, dass die Behandlung der Filterhilfsstoffe chargenweise oder online erfolgt.

10. Verfahren nach einem der Ansprüche 4 bis 9, dadurch gekennzeichnet, dass die Filterhilfsstoffe mit einer alkalischen Flüssigkeit aus der Filtervorrichtung ausgespült und behandelt werden.

11. Verfahren nach einem der Ansprüche 1 bis 10, dadurch gekennzeichnet, dass die Filterhilfsstoffe in aufgeschlemmtem Zustand bei einer Temperatur von ca. 85°C gehalten und sterilisiert werden.

12. Verfahren nach einem der Ansprüche 1 bis 10, dadurch gekennzeichnet, dass die von Ablagerungen getrennten Filterhilfsstoffe aufgeschlemmt, bei einer Temperatur von ca. 85°C sterilisiert und in erwärmten Zustand in der für die Filtration üblichen Konzentration einer Filtervorrichtung zudosiert werden.

13. Vorrichtung zum Ablösen und Trennen von Ablagerungen von Filterhilfsstoffen, umfassend eine Beschallungszone zum Einbringen einer Beschallungflüssigkeit und der Filterhilfsstoffe, eine Beschallungsvorrichtung zur Übertragung von Schwingungen auf die Beschallungsflüssigkeit und die darin befindlichen Filterhilfsstoffe und zum Ablösen der Ablagerungen von den Filterhilfsstoffen, eine Separationsvorrichtung zur Bildung einer Filterschicht aus in die Separationsvorrichtung eingebrachten Filterhilfsstoffen und zum Hindurchführen der in der Beschallungszone zuvor von den Filterhilfsstoffen abgelösten Ablagerungen und der Beschallungsflüssigkeit durch die aufgebaute Filterschicht.

14. Vorrichtung nach Anspruch 13, dadurch gekennzeichnet, dass als Separationsvorrichtung eine Zentrifuge (25) eingesetzt wird.

15. Vorrichtung nach einem der Ansprüche 13 oder 14, dadurch gekennzeichnet, dass als Beschallungsvorrichtung eine Schallsonde (2) in das Beschallungsmedium eingetaucht ist und durch ihre Einwirkung die darin eingebrachten auf den Filterhilfsstoffen haftenden Ablagerungen ablöst.

16. Vorrichtung nach Anspruch 15, dadurch gekennzeichnet, dass die Ablagerungen durch die Beschallung in kleinere Fraktionen aufgeteilt werden.

17. Verwendung der Verfahren nach einem der Ansprüche 1 bis 12 zur Reinigung von Kieselgur im allgemeinen, zur Reinigung und Aufbereitung von Kieselgur vor dem erstmaligen Einsatz als Filterhilfsmittel, zur Reinigung und Regeneration von Kieselgur und/oder Zusatzstoffen aus dem Filtrationsprozess.

18. Verwendung der Verfahren nach einem der Ansprüche 1 bis 12 bei der Bier-, Wein- und Fruchtsaftherstellung, oder bei der Regeneration von Filterhilfsstoffen bei chemischen Verfahren.

## Claims

1. Method of loosening and separating deposits from filtering aids, wherein
- the filtering aids are introduced into an acoustic irradiation zone together with an acoustic irradiation fluid,
- the deposits are loosened from the filtering aids by an acoustic irradiation process using sound waves, and subsequently
- the filtering aids are retained in a separating device in the form of a filter layer, and acoustic irradiation fluid and deposits are conducted through the filter layer and eliminated.

2. Method according to claim 1, characterised in that the acoustic irradiation fluid, together with the loosened deposits and the filtering aids, are conducted from the acoustic irradiation zone into the separating device.

3. Method according to claim 1, characterised in that the deposits are split-up and separated by acoustic irradiation whilst being kept in their mutually liberated form.

4. Method according to one of claims 1 to 3, characterised in that the acoustic irradiation of the filtering aids, charged with deposits, is effected in an alkaline acoustic irradiation fluid with a leach concentration of less than 2 %.

5. Method according to one of claims 1 to 4, characterised in that the separation of the deposits and the acoustic irradiation fluid from the filtering aids is effected by centrifuging.

6. Method of separating filtering aids and deposits loosened therefrom and treatment fluid used therefor according to one of the preceding claims 1 to 5, characterised in that the treatment fluid, with the deposits which are contained therein and are present in their liberated form, and the filtering aids are continuously supplied to a separating device, in which the filtering aids are retained and form a filter layer, which continuously becomes thicker, and through which layer the treatment fluid with the deposits is guided, and the deposits and the treatment fluid are separated from the filtering aids.

7. Method according to one of claims 1 to 6, characterised in that the filtering aids are rinsed again with fluid during the separation process.

8. Method according to claim 7, characterised in that the pH value of the filtering aids is reduced by the rinsing fluid.

9. Method according to one of claims 1 to 8, characterised in that the treatment of the filtering aids is effected chargewisely or on-line.

10. Method according to one of claims 4 to 9, characterised in that the filtering aids are rinsed from the filtering device with an alkaline fluid and treated.

11. Method according to one of claims 1 to 10, characterised in that the filtering aids are kept in the suspended state at a temperature of approx. 85° C and sterilised.

12. Method according to one of claims 1 to 10, characterised in that the filtering aids, separated from deposits, are suspended, sterilised at a temperature of approx. 85° C and, in the heated state, metered out to a filtering device in the concentration usual for the filtration.

13. Apparatus for loosening and separating deposits from filtering aids, comprising an acoustic irradiation zone for introducing an acoustic irradiation fluid and the filtering aids, an acoustic irradiation device for transferring vibrations to the acoustic irradiation fluid and the filtering aids situated therein and for loosening the deposits from the filtering aids, a separating device for forming a filter layer from filtering aids which are introduced into the separating device and for guiding the deposits, previously loosened from the filtering aids in the acoustic irradiation zone, and the acoustic irradiation fluid through the built-up filter layer.

14. Apparatus according to claim 13, characterised in that a centrifuge (25) is used as the separating device.

15. Apparatus according to one of claims 13 or 14, characterised in that a sound probe (2) is immersed in the acoustic irradiation medium as the acoustic irradiation device and, by its effect, loosens the deposits introduced therein and adhering to the filtering aids.

16. Apparatus according to claim 15, characterised in that the deposits are split-up into smaller fractions by the acoustic irradiation.

17. Use of the methods according to one of claims 1 to 12 for purifying diatomaceous earth generally, for purifying and processing diatomaceous earth prior to the initial use as a filtering aid, for purifying and regenerating diatomaceous earth and/or additional substances from the filtration process.

18. Use of the methods according to one of claims 1 to 12 for the production of beer, wine and fruit juice, or for the regeneration of filtering aids in chemical methods.

## Revendications

1. Procédé pour détacher et pour séparer des dépôts d'adjuvants de filtration qui consiste :
- à introduire les adjuvants de filtration ensemble avec un liquide pour exposition aux ultrasons dans une zone d'exposition aux ultrasons,
- à détacher les dépôts des adjuvants de filtration par exposition à des ondes sonores et ensuite,
- à retenir dans un dispositif de séparation des adjuvants de filtration sous la forme d'une couche filtrante et à faire passer le liquide pour exposition aux ultrasons et les dépôts à travers la couche filtrante et à les séparer.

2. Procédé suivant la revendication 1, caractérisé en ce qu'il consiste à envoyer le liquide pour exposition aux ultrasons en même temps que les dépôts détachés et les adjuvants de filtration de la zone d'exposition aux ultrasons au dispositif de séparation.

3. Procédé suivant la revendication 1, caractérisé en ce qu'il consiste à répartir les dépôts et à les séparer par exposition aux ultrasons alors qu'ils sont maintenus sous une forme mutuellement libérée.

4. Procédé suivant l'une des revendications 1 à 3, caractérisé en ce qu'il consiste à effectuer l'exposition aux ultrasons des adjuvants de filtration chargés des dépôts dans un liquide alcalin pour exposition aux ultrasons ayant une concentration en lessive inférieure à 2 %.

5. Procédé suivant l'une des revendications 1 à 4, caractérisé en ce qu'il consiste à séparer par centrifugation les dépôts et le liquide pour exposition aux ultrasons des adjuvants de filtration.

6. Procédé de séparation d'adjuvants de filtration et de dépôts qui en sont détachés et du liquide de traitement utilisé à cet effet suivant l'une des revendications 1 à 5 précédentes, caractérisé en ce qu'il consiste à envoyer le liquide de traitement avec les dépôts qui y sont contenus sous forme libérée et les adjuvants de filtration en continu à un dispositif de séparation dans lequel les adjuvants de filtration sont retenus et dans lequel il se forme une couche filtrante devenant continuellement plus épaisse à travers laquelle passe le liquide de traitement avec les dépôts et à séparer les dépôts et le liquide de traitement des adjuvants de filtration.

7. Procédé suivant l'une des revendications 1 à 6, caractérisé en ce qu'il consiste à laver par du liquide les adjuvants de filtration pendant l'opération de séparation.

8. Procédé suivant la revendication 7, caractérisé en ce qu'il consiste à abaisser le pH des adjuvants de filtration par le liquide de lavage.

9. Procédé suivant l'une des revendications 1 à 8, caractérisé en ce qu'il consiste à effectuer en discontinu ou en continu le traitement des adjuvants de filtration.

10. Procédé suivant l'une des revendications 1 à 9, caractérisé en ce qu'il consiste à faire sortir du dispositif de filtration les adjuvants de filtration en les lavant par un liquide alcalin et à les traiter par ce liquide alcalin.

11. Procédé suivant l'une des revendications 1 à 10, caractérisé en ce qu'il consiste à maintenir et à stériliser les adjuvants de filtration à l'état de boue à une température de 85°C.

12. Procédé suivant l'une des revendications 1 à 10, caractérisé en ce qu'il consiste à mettre sous forme de boue les adjuvants de filtration séparés des dépôts, à les stériliser à une température de 85°C environ et à les envoyer de manière dosée à l'état le plus chaud en la concentration habituelle pour la filtration à un dispositif de filtration.

13. Dispositif pour détacher et séparer des dépôts d'adjuvants de filtration, comprenant une zone d'exposition aux ultrasons pour introduire un liquide pour exposition aux ultrasons et les adjuvants de filtration, un dispositif d'exposition aux ultrasons pour transmettre des oscillations au liquide pour exposition aux ultrasons et aux adjuvants de filtration qui s'y trouvent et pour détacher les dépôts des adjuvants de filtration, un dispositif de séparation pour former une couche filtrante à partir des adjuvants de filtration introduits dans le dispositif de séparation et pour faire passer les dépôts détachés au préalable des adjuvants de filtration dans la zone d'exposition aux ultrasons et le liquide pour exposition aux ultrasons à travers la couche filtrante formée.

14. Dispositif suivant la revendication 13, caractérisé en ce qu'il est utilisé, comme dispositif de séparation, une centrifugeuse (25).

15. Dispositif suivant la revendication 13 ou 14, caractérisé en ce qu'il est immergé, comme dispositif d'exposition aux ultrasons, une sonde (2) ultrasonore dans le milieu d'exposition aux ultrasons et les dépôts adhérents aux adjuvants de filtration qui y sont introduits sont détachés par son action.

16. Dispositif suivant la revendication 15, caractérisé en ce que les dépôts sont répartis en plus petites fractions par l'exposition aux ultrasons.

17. Utilisation du procédé suivant l'une des revendications 1 à 12, pour épurer de la terre de diatomée d'une manière générale, pour épurer et préparer de la terre de diatomée avant la première utilisation comme adjuvant de filtration, pour épurer et régénérer la terre de diatomée et/ou des additifs provenant de l'opération de filtration.

18. Utilisation du procédé suivant l'une des revendications 1 à 12 pour la préparation de la bière, du vin et de jus de fruits ou pour la régénération d'adjuvants de filtration dans des procédés chimiques.
